# EUROPEAN PATENT APPLICATION

(11) **EP 4 663 739 A1**
(43) Date of publication of application: **17.12.2025**
(21) Application number: 24000073.7
(22) Date of filing: 10.06.2024
(51) Int. Cl.: C12G 3/024

(54) **PÁLINKA REFINING PROCESS AND EQUIPMENT FOR DOMESTIC AND SMALL-SCALE PÁLINKA BREWING DEVICES**

(71) Applicant: Kerekes, József, 2040 Budaörs (HU)
(72) Inventor: Kerekes, József, 2040 Budaörs (HU)

(57) **Abstract**

The invention is a brandy refining process based on repeated partial distillation, where the reflux is removed in each process step.

## Description

The subject of the invention is a refining process and equipment for domestic and small-scale brandy brewing devices. A device built in traditional stills, between the cauldron and the condenser, which improves the quality of the distillate, so that high-quality distillate can be produced with a single boiling.

Its field of use is primarily homemade brandy brewing, but it can be used for any other alcoholic distillation processes.

The purpose of pálinka brewing is to extract the alcohol and desirable aromatics from the fermented fruit, i.e. the mash.

In practice, this is achieved by boiling the mash in a closed cauldron, refining the resulting steam in some way, and then liquefying it in the condenser.

Refining in the pálinka brewing process, in addition to preserving desirable aromas in as high a concentration as possible, means separating the undesirable constituents in the steam. Based on our interpretation, refining means increasing the enjoyment value of the distillate, in contrast to the traditional understanding, where, according to the primary approach, quality is usually understood as increasing the alcohol level of the distillate.

The invention only covers the refining process and refining equipment, which is installed between the boiler and the condenser. The complete distillation apparatus is included only for a better understanding of the process.

With the invention, the goal was to create a simple, efficient, gradually refining process and equipment for home brandy brewing devices for the target group of consumers. It belongs to a process and equipment that refines the distillate, not by increasing its alcohol content, but by gradually separating the undesirable constituents that are continuously vaporized in the cauldron and deteriorate the quality. A process and equipment that drains the reflux generated during refining in stages. A process and equipment that produces a high-quality distillate by boiling down the mash in one go. A procedure and equipment, the use of which does not require special expertise, is cheap and therefore available to everyone.

The brandy brewing procedures used in practice do not meet the expected quality requirements in all cases. Some of the devices ensure a high-quality final product, but these devices are complicated and not affordable for private brewers who make brandy from their own fruit for their own consumption. Therefore, there is a great demand for simple, effective, new solutions.

Some practical and theoretical solutions:
The book Zoltán Békési, Erzsébet Csarnai: Házi Pálinkáfőzés summarizes the simple brandy-making devices used in home-made brandy-brewing. Here we can also see an example of the use of dephlegmators built above the cauldron. According to the book, dephlegmators are used to increase the alcohol content of the vapor, and the number of built-in dephlegmators is maximized at three.

The difference is that the number of dephlegmators used in the invention is at least three, ideally six to ten, but there may be more. This difference is possible because the invention drains the reflux by deflegmator. This gives rise to the essential difference that the invention not only increases the alcohol content, but also performs real rectification and gradual refinement. Another difference between the devices summarized in the book and the devices assembled according to the invention is that with the former it is necessary to distill at least twice, while with the method according to the invention it is enough to boil the mash once.

The distillation equipment outlined in Figure 6 in the Lenntech: Distillácion note is a single-stage device with a tower column, bubble cap, or sieve plate. These devices produce excellent quality, but are complicated and expensive. The device described here contains a "U" tube structure similar to the invention, a deflegmator.

The deflegmator in the antheorite is included in a different structure, its connection points are different.

While in the anteorite the dephlegmator is connected to the column and the condenser, the invention is connected to the cauldron and condenser. The difference compared to the invention is that the dephlegmator here has a different task, the primary task of the one in the anteorite is to supply the refining column with reflux, while the task of the invention is only to refine the steam. Furthermore, their operation is also different, the dephlegmator in the anteorite is cooled with water, while the invention is cooled with air. This is because the refining column needs a large amount of reflux, while the invention separates only as much reflux as is necessary for refining. The amount of reflux necessary for the operation of the anteorite can only be ensured by strong forced cooling, i.e. water cooling. The most important difference is that the dephlegmators in the anteorite cool the steam quickly, while the invention needs uniform continuous cooling, and only this can ensure the efficient operation of the refining process according to the invention.

GB 507435 patent should also be mentioned. This patent is a process based on centrifugal reflux selection belonging to the Separation branch of the Chemical Industry, a somewhat extreme branch of it. The essence of this anteority is that the reflux precipitated on the outer wall of the orbit due to centrifugal force from steam flowing at high speed in a circular path is led away in each circular path and then returned to the previous circular path system. In the invention, the steam flow rate is so small that the centrifugal force has no role in the selection and removal of the reflux. In the invention, gravity provides the force necessary for reflux flow. Furthermore, in the case of the invention, the flow of steam takes place in a largely, self-explanatory, straight path. There is also a difference in the reflux drainage, with the antheority, the return of the reflux is allowed, in fact it is a feature of its operation, whereas with the invention, the aim is to remove the reflux from the refining process as soon as possible. The reflux, due to the boiling, mainly contains undesirable components, therefore, the drainage according to the invention is desirable. This is not possible with antheority, because reflux is necessary to increase the alcohol content. The enriching effect is achieved by bringing the steam into contact with the reflux. When steam and reflux come into contact, the steam condenses, and then a new equilibrium state of steam is formed. Another difference is that the anteority has an externally introduced liquid, while the invention does not. The use of antheorite in brandy brewing is largely limited by the liquid introduced from the outside, as it is taken from the cauldron and fed into the system at the central unit. The problem with this is that the production of fruit distillate is made from fermented fruit, which contains a significant amount of solid matter, which, if introduced into the dephlegmators, clogs it. We conclude from this that you cannot make pálinka (fruit spirit) with anteorite.

The two above are based on the RECTIFICATION procedure described in the antheoretic, Eötvös Lóránt University of Science, Chemical Operations note, available on the website https://technologia.chem.elte.hu/hu/muvelettan/Vegyipari_Muvelettan_teljes.pdf, in the note pages 48-49. The antheoretic, structural structure of GB 507435 can be recognized from the principle process described in Figure 8.1. They agree, in the middle is the liquid intake, the liquid intake divides the process into an enriching and a depleting stage, and the place of heating and cooling is also the same. While, it can be recognized based on the characteristics of Lenntech antheority, figures 8.2 and 8.3. The Lenntech and Gb 507435 atheories are based on reboiling, while the invention is based on repeated partial distillation.

The invention is based on the realization that in practice the design of the steam pipe connecting the boiler and the condenser is such that it rises towards the condenser. The significance of this is that the pipe is in contact with the ambient air from the outside, so it works as a deflegmator. The reflux that condenses in the steam tube flows back into the boiler and refines the steam. At the same time, we also know from practice that increasing the length of the steam pipe beyond a limit does not lead to any improvement in quality. Logic assumes that if we increase the length of the steam pipe, the effect of the refinery should also increase proportionally. This is the case because the reflux flows backwards through the vapor tube, which affects the further refinement. After a while, the flowing vapor picks up as many quality-deteriorating compounds as it releases. We solved this by dividing the long steam pipe into several pieces, placing it in the arrangement according to the invention, and directing the reflux from the thus formed pipe sections. With this, we have achieved that the sections of the long tube can all perform real refinement.

The invention is a refining process and equipment, different from the previous ones, which realizes the refining, not by increasing the alcohol content of the distillate, but by gradually separating the undesirable constituents in the steam.

In the method according to the invention, the refined vapor always remains in a vapor state, while in the other methods the vapor is condensed step by step and becomes vapor again by boiling.

In summary, previous refining processes are based on repeated distillation (boiling), while the invention is based on repeated partial distillation.

List of figures and drawings:
Figure 1, flow diagram, which represents the refining process, between the boiler A and the condenser B connected to it.
Fig. 2 shows the refining equipment and its installation, between the cauldron A and the condenser B in the commonly used homemade brandy brewing device.

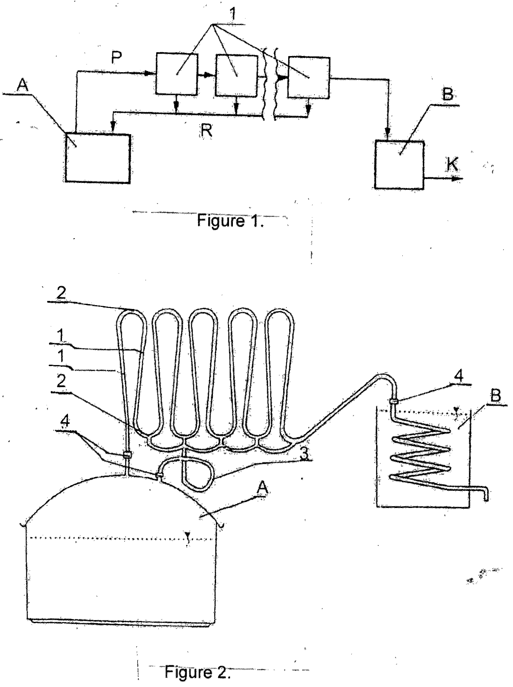

The refining process according to the invention is illustrated in Figure 1. Refining is carried out by multiple, repeated partial distillation of the vapor P generated in the cauldron A, i.e., the reflux R generated during the partial distillation is removed after each partial distillation. The steam refined during the process is liquefied in the condenser B, from which the distillate K flows out. With the partial distillations, we gradually remove the constituents that impair the quality from the steam, which allows us to achieve a gradual refinement. The number of partial distillations required for refinement is at least three, but preferably six to ten, but may be more. Partial distillation takes place in delegmators 1. The resulting reflux into the cauldron A we drive. By draining the reflux R generated during partial distillation, we achieve that the vapor P is gradually refined and rectified.

It may be advantageous to implement the invention in such a way that it allows reflux R to be discharged directly from the refining process, rather than into the cauldron A. This can be solved with a three-way valve installed in the reflux return R, before the boiler A. This makes it possible not to contaminate the mash with reflux R, which already contains mostly bad ingredients. A practical example of this, when separating the pre-distillate materials that are flooded, it is advisable to flood the reflux as well and not return it to the boiler A. This solution is advantageous because the proportion of quality-deteriorating components in cauldron A will be lower, so the refining equipment will provide a better-quality distillate.

The difference between the refining process according to the invention and the previously known processes can be illustrated in the simplest way by comparing it with the Kisüst method.

Refinement, whatever the method, is based on the equilibrium between the liquid and vapor phases. The vapor phase contains a larger proportion of the constituents we need. After examining the vapor P coming out of the cauldron A, if it is cooled it is a liquid, if it is repeatedly boiled it becomes a vapor P. This process of change of state is reversible, i.e. regardless of the direction in which the change of state takes place, from liquid to vapor or from vapor to liquid, the composition of the two phases is the same.

More simply, during a change of state, in the case of the same liquid-vapor mass ratio, regardless of the direction of the state change, the composition of the liquid-vapor phase is the same.

In the Kishüst method, the distillation is repeated at least once.

In the case of the invention, a part of the steam P coming out of the cauldron A is condensed in 1 dephlegmator, and then a part of the steam P is condensed in the same way in the next 1 dephlegmator. It follows from the above that repeated distillation and repeated partial distillation have the same effect on K distillate. The peculiarity of the method according to the invention is that the partial distillation can be repeated more easily, preferably six to ten times, but even twenty times, without boiling the distillate K repeatedly.

The efficiency of the refining process can be illustrated by the fact that in practice boiling and partial distillation are processes in the same but opposite direction. By partial distillation, we can separate the constituents that impair the quality, which are mostly substances with a high boiling point, which we collectively call kosma oils. The problem with this is that, just like the water-alcohol mixture, we cannot separate the alcohol from a single distillation, nor can we separate the kosma oils from a partial distillation. Both distillation and partial distillation are liquid-vapor phases process based on balance. We can understand this by imagining a process. The liquid mixture is boiled in a closed space, then steam is generated from the liquid. At a given point, both the liquid and the vapor contain all the constituents of the original mixture. How much of what is determined by the liquid-vapor phase balance. During refining, we take advantage of the fact that the vapor state contains the components we need, while the liquid contains the components that are not desirable.

In order to understand the refining process according to the invention, let's mentally perform a simplified experiment, imagine that the vapor P in the dephlegmator 1 is cooled, then it becomes a liquid. We start boiling this liquid, first the good components evaporate, we do this until only 2-5% of the liquid remains. We know from experience that this 2-5% liquid will contain the most undesirable components, since this is the essence of distillation. Deflegmator 1 will separate the same 2-5%, since this process is a reversible process.

It is easy to see from this that if the composition of the R reflux separated in dephlegmator 1 is changed from the outside, with the reflux separated in the previous 1 dephlegmator, the refining effect will not or only partially prevail.

The partial distillation is repeated several times and by diverting the reflux R generated in the 1 dephlegmator to each 1 dephlegmator, we achieve that the consecutive 1 dephlegmators continue to refine and rectify the P vapor.

A simplest implementation of the invention is shown in figure 2. The refining equipment consists of at least three, but preferably six to ten, or more, 1 dephlegmators. In the implementation example, the refining equipment consists of ten dephlegmators, which are connected to the boiler A and the condenser B. The realization of each deflegmator 1 is a simple pipe section, its position is preferably vertical or close to it, so that the generated reflux R can flow out as easily as possible. Deflegators 1 are connected by 2 arches. The pipe system 3 is connected to the lower 2 arches, which leads the resulting reflux through the deflegmator 1 and then into the cauldron A. The design of the pipe system 3 according to Figure 2 is such that a water seal is formed in each of its branches, which prevents the flow of steam from bypassing the deflegators 1. The refining equipment is connected to the boiler A and the condenser B with 4 Dutch connections. The deflegmators 1 are cooled with ambient air. In deflegmator 1, the reflux is selected and removed by gravity.

An advantageous design can be the design of the refining equipment in which a three-way valve is installed in the 3-pipe system, directly before the connection to the boiler A. In one position of this valve, it leads the reflux out of the refinery, and in the other position, it leads to the boiler A.

According to our experience, using a refining equipment consisting of ten dephlegmators, distillate is produced with a single distillation, it has a crystal clear appearance and gives back typical aromas of fruit. The mash used for the experiment was made from plums, which can be called an average fruit, and the sugar content can also be called average.

Comparing the invention with a traditional brandy still, the traditional method requires two distillations, while the invention requires a single distillation. With its use, significantly better quality pálinka can be made. The simple operation of the invention, which does not require special expertise, is also a great advantage.

## Claims

1. Pálinka refining process for domestic and small-scale brandy brewing devices, for the purpose of improving the quality of the distillate (K) produced, where the refinement is achieved by refining the vapor (P) generated in the still (A) during the distillation process, which is liquefied in the condenser, **characterized by** repeat the partial distillation of the steam (P) in at least three, but preferably six to ten, but maybe more, successively placed dephlegmators (1), which gradually separate the constituents from the steam (P) that impair the quality, the resulting reflux (R) is led to each deflegmator (1).
Typical figure: Figure 1

2. Pálinka refining equipment for domestic and small-scale brandy brewing devices, for the purpose of improving the quality of the distillate, which in traditional stills, **characterized by** the fact that it is connected to the cauldron (A) and the condenser (B), from at least three dephlegmators (1) connected in series, these it consists of connecting arches (2), a reflux collection pipe system (3) connected to the lower point of the arches (2) and connecting them to the boiler (A).
Typical figure: Figure 2.

3. The method according to claim 1, **characterized in that** the collected reflux is discharged through a three-way valve.

4. Refining equipment according to claim 2, **characterized in that** a three-way valve is installed in the collecting pipe (3).

## Amended claims

### Amended claims in accordance with Rule 137(2) EPC.

1. Pálinka refining process for domestic and small-scale brandy brewing devices, for the purpose of improving the quality of the distillate (K) produced, where the refinement is achieved by refining the vapor (P) generated in the still (A) during the distillation process, which is liquefied in the condenser, **characterized by** repeat the partial distillation of the steam (P) in at least three, but preferably six to ten, but maybe more, successively placed dephlegmators (1), which gradually separate the constituents from the steam (P) that impair the quality, the resulting reflux ( R) is led to each deflegmator (1),
Typical figure: Figure 1.

2. A pálinka refining device for homemade and small-scale distillation equipment, aimed at improving the quality of the distillate, which connects to the still (A) and to the condenser (B) through a bent pipe (5), **characterized by** at least three deflegmators (1) connected in series, arches (2) connecting them, and a reflux collection pipe system (3) that connects to the lower point of the arches (2) and to the pot (A).
Typical figure: Figure 2.

3. The method according to claim 1, **characterized in that** the collected reflux is discharged through a three-way valve (H1).

4. Refining equipment according to claim 2, **characterized by** in a three-way valve (H2) is installed in the collecting pipe (3).
